# EUROPÄISCHE PATENTANMELDUNG

(11) **EP 3 410 587 A1**
(43) Veröffentlichungstag der Anmeldung: **05.12.2018**
(21) Anmeldenummer: 18170889.2
(22) Anmeldetag: 04.05.2018
(51) Int. Cl.: H02K 49/10, H02K 49/06

(54) **MAGNETISCHES UMLAUFGETRIEBE MIT VARIABLER CHARAKTERISTIK**

(30) Priorität: 31.05.2017 DE 102017209246
(71) Anmelder: Deere & Company, Moline, IL 61265 (US)
(72) Erfinder: Lang, Matthias, 68163 Mannheim (DE); Gugel, Rainer, 68163 Mannheim (DE); Mueller, David, 68163 Mannheim (DE)
(74) Vertreter: Dehnhardt, Florian Christopher

(57) **Zusammenfassung**

Magnetisches Umlaufgetriebe, das einen inneren Ring mit einer ersten Anzahl von Magnetpolen, einen mittleren Ring mit einer Anzahl ferromagnetischer Stäbe, einen äußeren Ring mit einer veränderbaren Anzahl von Magnetpolen, die sich von der ersten Anzahl unterscheidet, und eine Steuerung zur Regelung der veränderbaren Anzahl von Magnetpolen umfasst und diese die Anzahl von Magnetpolen am äußeren Ring variiert, so dass die Anzahl der Magnetpole entweder der Summe aus der Anzahl der Magnetpolpaare am inneren Ring und aus der Anzahl der ferromagnetischen Stäbe am mittleren Ring.

## Beschreibung

Magnetische Umlaufgetriebe werden zur Drehmomentübertragung genutzt. Diese sind hinreichend bekannt. Ein solches magnetisches Umlaufgetriebe ist in DE 10 2016 210 333.4 gezeigt. Sie bieten gegenüber mechanischen Umlaufgetriebestufen Vorteile, wie eine sichere Begrenzung des zu übertragenden Drehmoments. Im Falle eines zu hohen Drehmomentes kann das magnetische Umlaufgetriebe überdrehen oder durchrutschen und begrenzt dadurch das übertragene Drehmoment auf voreingestellte Parameter. DE 10 2016 210 333.4 dient zugleich als Grundlage und ist vollständig in die vorliegende Erfindung mit einbezogen.

Das Verhalten zur Drehmomentbegrenzung einer magnetischen Getriebestufe ist durch die Konstruktion festgelegt und sämtliche Geometrien, die hierbei definiert werden, tragen zu dem Verhalten des magnetischen Umlaufgetriebes und der übertragbaren Höhe des Drehmoments bei. Während dem Betrieb sind diese Kenngrößen somit nicht mehr anpassbar bzw. es muss eine vollständige Neukonstruktion erfolgen.

Derartige Getriebe sind meist als Dreiphasensysteme ausgelegt, wodurch sich ein entsprechender Phasenwinkel von 120° ergibt.

Meist sind am inneren und am äußeren Ring, die drehbar gelagert sind, elektrische Spulen vorgesehen, während am mittleren Ring ferromagnetische Stäbe angebracht sind.

Durch die Anzahl der Spulen, der Ferritkerne und den sich daraus ergebenden Verhältnissen ist das Betriebsverhalten des Umlaufgetriebes festgelegt, insbesondere die Drehzahlverhältnisse der einzelnen Ringe zueinander.

Es ist somit eine Aufgabe der vorliegenden Erfindung, ein magnetisches Umlaufgetriebe zur Verfügung zu stellen, das eine Anpassbarkeit aufweist.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Eine Ausbildung der Erfindung weist ein magnetisches Umlaufgetriebe auf, das einen inneren Ring mit einer ersten Anzahl von Magnetpolen, einen mittleren Ring mit einer Anzahl ferromagnetischer Stäbe, einen äußeren Ring mit einer veränderbaren Anzahl von Magnetpolen, die sich von der ersten Anzahl unterscheidet, und eine Steuerung zur Regelung der veränderbaren Anzahl von Magnetpolen auf, wobei die Steuerung derart ausgelegt ist, dass diese die Anzahl von Magnetpolen am äußeren Ring variiert, so dass die Anzahl der Magnetpole entweder der Summe aus der Anzahl der Magnetpolpaare am inneren Ring und aus der Anzahl der ferromagnetischen Stäbe am mittleren Ring oder der Differenz aus der Anzahl der Magnetpolpaare am inneren Ring und aus der Anzahl der ferromagnetischen Stäbe am mittleren Ring entspricht.

Die Ausbildung weist zwei unterschiedliche Betriebszustände auf. Diese unterscheiden sich durch Vorzeichen und der sich ergebenden Standardübersetzung. Die erfindungsgemäße Umlaufgetriebestufe kann in kontinuierlich variablen elektrisch leistungsverzweigten Getriebeanordnungen verwendet werden. Die unterschiedlichen Betriebszustände können zur Realisierung von zwei unterschiedlichen Übersetzungen verwendet werden. Es kann ein Wechsel im Betriebszustand von "High" und "Low" erfolgen. Ebenso kann ein Umschalten von einem Normalgang in einen Kriechgang oder einen Rückwärtsgang erfolgen.

In einer weiteren Ausführung ist der mittlere Ring axial verschiebbar, so dass die Anzahl der ferromagnetischen Stäbe verändert wird.

Es kann somit eine weitere Anpassung der ferromagnetischen Stäbe vorgenommen werden, wodurch das Verhältnis zwischen den ferromagnetischen Stäben und den Magnetpolen am Innenring weiter verändert werden kann. Die Getriebestufe kann einen größeren Anpassungsbereich für möglichen Übersetzungen abdecken.

Bei einer Ausbildung ist der mittlere Ring aus wenigstens zwei zueinander verdrehbaren Segmenten ausgeführt, wobei durch deren gegenseitiges Verdrehen die Anzahl der ferromagnetischen Stäbe verändert wird.

Dies ermöglicht eine Anpassung der Anzahl der ferromagnetischen Stäbe auf kleinem Bauraum, so dass die Baugröße reduziert werden kann.

In einer Ausführung liegen die Segmente axial nebeneinander.

Der mittlere Ring ist senkrecht zu einer zentralen Mittelachse geteilt, wobei die Teilstücke zueinander verdreht werden können. Durch die Lage der Ringstücke nebeneinander auf derselben Achse kann der Durchmesser reduziert werden, der für den Aufbau notwendig ist.

Bei einer weiteren Ausbildung sind die Magnetpole am äußeren Ring durch elektrische Spulen gebildet, deren Anzahl dem 1,5 fachen des kleinsten gemeinsamen Vielfachen aus der Summe aus der Anzahl der Magnete am inneren Ring und aus der doppelten Anzahl der ferromagnetischen Stäbe am mittleren Ring und der Differenz aus der Anzahl der Magnete am inneren Ring und aus der doppelten Anzahl der ferromagnetischen Stäbe am mittleren Ring oder einem Vielfachen davon entspricht.

Es ergeben sich zwei Lösungen für die Spulenanzahl am äußeren Ring. Mit Hilfe der Steuerung können die Spulen unterschiedlich beschaltet werden und ermöglichen, die Getriebestufe bei zwei unterschiedlichen Betriebspunkten zu verwenden.

Bei Verwendung eines variablen mittleren Rings mit einer veränderlichen Anzahl von ferromagnetischen Stäben kann ein günstiges Verhältnis der Spulen eingestellt werden.

In einer Ausführung stehen wenigstens zwei Varianten der Anzahl der Magnetpole am äußeren Ring in einem Verhältnis von 2:1.

Die Ausbildung ermöglicht eine einfache elektrische Verschaltung, sowie eine niedrige Spulenanzahl.

Eine weitere Ausbildung betrifft ein Verfahren zur Steuerung für ein magnetisches Umlaufgetriebe, das einen inneren Ring mit einer ersten Anzahl von Magnetpolen, einen mittleren Ring mit einer Anzahl ferromagnetischer Stäbe, einen äußeren Ring mit einer veränderbaren Anzahl von Magnetpolen, die sich von der ersten Anzahl unterscheidet, und eine Steuerung zur Regelung der veränderbaren Anzahl von Magnetpolen umfasst, wobei die Steuerung derart ausgelegt ist, dass diese die Anzahl von Magnetpolen am äußeren Ring variiert, so dass die Anzahl der Magnetpole entweder der Summe aus der Anzahl der Magnetpolpaare am inneren Ring und aus der Anzahl der ferromagnetischen Stäbe am mittleren Ring oder der Differenz aus der Anzahl der Magnetpolpaare am inneren Ring und aus der Anzahl der ferromagnetischen Stäbe am mittleren Ring entspricht.

Bei dem Verfahren weist das Umlaufgetriebe zwei unterschiedliche Betriebszustände auf. Diese unterscheiden sich durch Vorzeichen und der sich ergebenden Standardübersetzung. Die erfindungsgemäße Umlaufgetriebestufe kann in kontinuierlich variablen elektrisch leistungsverzweigten Getriebeanordnungen verwendet werden. Die unterschiedlichen Betriebszustände können zur Realisierung von zwei unterschiedlichen Übersetzungen verwendet werden. Es kann ein Wechsel im Betriebszustand von "High" und "Low" erfolgen. Ebenso kann ein Umschalten von einem Normalgang in einen Kriechgang oder einen Rückwärtsgang erfolgen. Mit Hilfe der Verfahrens kann durch das gezielte Schalten der vorberechneten Spulen ein Umschalten zwischen den Betriebsmodi erfolgen.

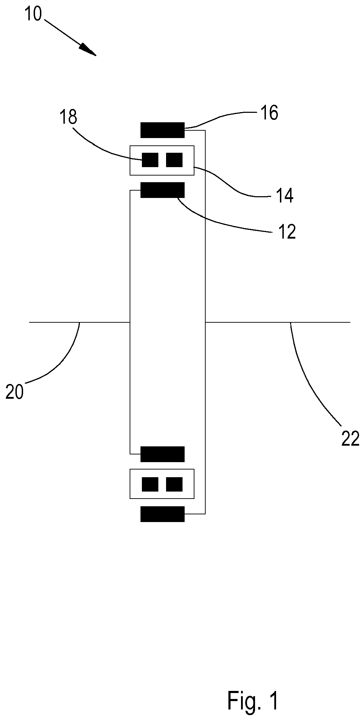

Weitere Aspekte der Erfindung werden anhand von Figur 1 beschrieben. Diese zeigt einen exemplarischen Aufbau einer magnetischen Getriebestufe 10.

Das magnetische Umlaufgetriebe 10 besteht aus drei, zueinander drehbar gelagerten Ringen. Die einzelnen Ringe sind konzentrisch gelagert und haben eine gemeinsame Drehachse. Durch eine Eingangswelle 20 wird ein Drehmoment oder Leistung eingeleitet, innerhalb des Umlaufgetriebes 10 moduliert und durch eine Ausgangswelle 22 ausgeleitet. Die Wellen 20, 22 können auch aus Hohlwellen bestehen.

Das Umlaufgetriebe 10 weist einen inneren Ring 12 auf. Der innere Ring 12 weist am Umfang verteilt Magnetpole auf, die mit den Magnetpolen und ferromagnetischen Stäben der weiteren Ringe in Wechselwirkung treten. Die Magnetpole des inneren Rings 12 können durch elektromagnetische Spulen ersetzt werden.

Der mittlere Ring 14 befindet sich radial zwischen dem äußeren Ring 16 und dem inneren Ring 12. Der mittlere Ring weist ferromagnetische Stäbe 18 auf. Die Anzahl der ferromagnetischen Stäbe 18 kann konstruktiv bedingt festgelegt sein, diese können jedoch auch variabel ausgeführt werden. Der mittlere Ring 14 kann mehrere konzentrische Ringabschnitte aufweisen, die durch Verdrehen in Überlappung gebracht werden können, wodurch eine neue Anzahl von ferromagnetischen Polen bzw. ferromagnetischen Stäben 18 gewählt werden kann. Das Verhältnis zwischen den Polen des mittleren Rings 14 und des inneren Rings 12 kann dadurch verändert werden.

Der äußere Ring 16 weist Magnetpole auf, die entlang des Umfangs verteilt angeordnet sind. Die Magnetpole könne auch durch elektromagnetische Spulen ersetzt werden. Diese können einzeln gewickelt sein oder als eine verteilte Wicklung ausgebildet sein. Die Anzahl der Magnetpole des äußeren Rings 16 unterscheidet sich von der Anzahl der Magnetpole am inneren Ring 12.

Die Anzahl der Magnetpole bzw. Spulen am äußeren Ring 16 kann mittels einer elektronischen Steuerung variiert werden. Es können wenigstens zwei unterschiedliche Gruppen von Magnetpolen beschaltet werden. Hierzu sind im äußeren Ring bereits beide Gruppen von Magnetpolen eingebracht. Im Betrieb ist davon jeweils eine Gruppe von Magnetpolen geschaltet, währen die zweite Gruppe inaktiv bleibt. Durch die Steuerung kann durch ein Beschalten von zusätzlichen Magnetpolen die Anzahl der Magnetpole erhöht bzw. durch ein gezieltes Abschalten verringert werden.

Durch das Ansteuern einer festgelegten Anzahl von Magnetpolen am äußeren Ring 16 ist es möglich, die magnetische Umlaufgetriebestufe zwischen wenigstens zwei unterschiedlichen Übersetzungen umzuschalten. Es kann zwischen einem normal Fahrbetrieb oder einem Fahrbetrieb mit einem hohen Drehmoment umgeschaltet werden, zwischen einem langsamen Fahrbetrieb und einem Fahrbetrieb mit einer höheren Geschwindigkeit für den Transport auf befestigten Fahrbahnen oder zwischen Vorwärtsfahrbetrieb und Rückwärtsfahrt.

Bei einer festgelegten Anzahl von Magnetpolen am Innenring 12 und einer festgelegten Anzahl von ferromagnetischen Stäben am mittleren Ring 14 existieren zwei Lösungen für die Anzahl von Magnetpolen am äußeren Ring 16. Besonders wenn die Magnetpole durch elektromagnetische Spulen ersetzt werden, ist es vorteilhaft, wenn die Anzahl dem kleinsten gemeinsamen Vielfachen der beiden Lösungen entspricht. Durch die Steuerung können beide Lösungen in einer Ausführung umgesetzt werden. Ein Ansteuern kann durch eine unterschiedliche Bestromung mittels einer elektrischen Schaltung realisiert werden. Üblich ist das Erzeugen eines magnetischen Feldes mit einem dreiphasigen Wechselstrom. Es kann auch ein anderer Stromverlauf verwendet werden, jedoch muss dazu die Anzahl der Spulen neu berechnet werden.

Die magnetische Umlaufgetriebestufe kann in einem landwirtschaftlichen Fahrzeug verwendet werden, um den vielfältigen Fahranforderungen besser gerecht zu werden. Mit Hilfe der magnetischen Umlaufgetriebestufe kann die Effizienz des Antriebsstrangs verbessert werden. Im Vergleich zum mechanischen verzahnten Getriebe unterbleiben zusätzliche Zahneingriffe und die damit verbundenen Einbußen am Wirkungsgrad.

## Patentansprüche

1. Magnetisches Umlaufgetriebe, umfassend
einen inneren Ring mit einer ersten Anzahl von Magnetpolen,
einen mittleren Ring mit einer Anzahl ferromagnetischer Stäbe,
einen äußeren Ring mit einer veränderbaren Anzahl von Magnetpolen, die sich von der ersten Anzahl unterscheidet,
einer Steuerung zur Regelung der veränderbaren Anzahl von Magnetpolen,
wobei die Steuerung derart ausgelegt ist, dass diese die Anzahl von Magnetpolen am äußeren Ring variiert, so dass die Anzahl der Magnetpole entweder der Summe aus der Anzahl der Magnetpolpaare am inneren Ring und aus der Anzahl der ferromagnetischen Stäbe am mittleren Ring oder
der Differenz aus der Anzahl der Magnetpolpaare am inneren Ring und aus der Anzahl der ferromagnetischen Stäbe am mittleren Ring entspricht.

2. Magnetisches Umlaufgetriebe nach Anspruch 1, wobei der mittlere Ring axial verschiebbar ist, so dass die Anzahl der ferromagnetischen Stäbe verändert wird.

3. Magnetisches Umlaufgetriebe nach Anspruch 1, wobei der mittlere Ring aus wenigstens zwei zueinander verdrehbaren Segmenten ausgeführt ist, wobei durch deren gegenseitiges Verdrehen die Anzahl der ferromagnetischen Stäbe verändert wird.

4. Magnetisches Umlaufgetriebe nach Anspruch 3, wobei die Segmente axial nebeneinander liegen.

5. Magnetisches Umlaufgetriebe nach einem der vorangehenden Ansprüche, wobei die Magnetpole am äußeren Ring durch elektrische Spulen gebildet sind, deren Anzahl dem 1,5 fachen des kleinsten gemeinsamen Vielfachen aus der Summe aus der Anzahl der Magnete am inneren Ring und aus der doppelten Anzahl der ferromagnetischen Stäbe am mittleren Ring und der Differenz aus der Anzahl der Magnete am inneren Ring und aus der doppelten Anzahl der ferromagnetischen Stäbe am mittleren Ring oder einem Vielfachen davon entspricht.

6. Magnetisches Umlaufgetriebe nach Anspruch 5, wobei wenigstens zwei Varianten der Anzahl der Magnetpole am äußeren Ring in einem Verhältnis von 2:1 stehen.

7. Verfahren zur Steuerung für ein magnetisches Umlaufgetriebe umfassend
einen inneren Ring mit einer ersten Anzahl von Magnetpolen,
einen mittleren Ring mit einer Anzahl ferromagnetischer Stäbe,
einen äußeren Ring mit einer veränderbaren Anzahl von Magnetpolen, die sich von der ersten Anzahl unterscheidet,
einer Steuerung zur Regelung der veränderbaren Anzahl von Magnetpolen,
wobei die Steuerung derart ausgelegt ist, dass diese die Anzahl von Magnetpolen am äußeren Ring variiert, so dass die Anzahl der Magnetpole entweder der Summe aus der Anzahl der Magnetpolpaare am inneren Ring und aus der Anzahl der ferromagnetischen Stäbe am mittleren Ring oder
der Differenz aus der Anzahl der Magnetpolpaare am inneren Ring und aus der Anzahl der ferromagnetischen Stäbe am mittleren Ring entspricht.
